# EUROPÄISCHE PATENTSCHRIFT

(11) **EP 4 070 936 B1**
(45) Veröffentlichungstag und Bekanntmachung des Hinweises auf die Patenterteilung: **02.04.2025**
(21) Anmeldenummer: 22158977.3
(22) Anmeldetag: 25.02.2022
(51) Int. Cl.: B29C 65/22, B29C 65/38, B65B 7/28, B65B 51/10, B65B 51/14

(54) **TIEFZIEHVERPACKUNGSMASCHINE MIT IMPULSSIEGELSCHIENEN UND IMPULSSIEGELVERFAHREN**
DEEP-DRAW PACKAGING MACHINE WITH IMPULSE SEALING RAILS AND IMPULSE SEALING METHOD
MACHINE D'EMBALLAGE PAR EMBOUTISSAGE POURVU DE RAILS DE SCELLAGE PAR IMPULSION ET PROCÉDÉ DE SCELLAGE PAR IMPULSION

(30) Priorität: 31.03.2021 DE 102021108126
(43) Veröffentlichungstag der Anmeldung: 12.10.2022
(73) Patentinhaber: MULTIVAC Sepp Haggenmüller SE & Co. KG, 87787 Wolfertschwenden (DE)
(72) Erfinder: RÄDLER, Michael, 87439 Kempten (DE); GRONDINGER, Bastian, 87640 Biessenhofen (DE); FELCH, Florian, 87471 Durach (DE)
(74) Vertreter: Grünecker Patent- und Rechtsanwälte PartG mbB

(56) Entgegenhaltungen:
- US-A- 5 096 052
- US-A- 5 345 747

## Beschreibung

Die vorliegende Erfindung bezieht sich auf eine Tiefziehverpackungsmaschine nach Anspruch 1. Ferner betrifft die vorliegende Erfindung ein Verfahren zum Verschließen von Verpackungsmulden gemäß Anspruch 9.

Es gibt bereits Schlauchbeutelmaschinen und Kammerbandmaschinen, die mittels einer Impulssiegelschiene eine Siegelnaht zum Verschließen einer offenen Seite von zugeführten Verpackungen herstellen. Eine solche Impulssiegelschiene ist beispielsweise aus der EP 2 505 340 A1 bekannt.

DE 198 15 763 C2 offenbart eine Impulssiegelschiene, die ein bestrombares Heizband umfasst. Zwischen einem Schienenkörper und dem Heizband ist eine thermische Isolation vorgesehen. Die Impulssiegelschiene wird fest auf die zu verschweißenden Folien gedrückt, während das Heizband über einen Impulsgeber mit einem Stromimpuls beaufschlagt und dadurch aufgeheizt wird, um die Folien miteinander zu verschweißen.

DE 197 37 471 C2 offenbart eine Impulsheizeinrichtung mit einem Träger aus Metall, auf dem eine elektrisch isolierende Schicht aufgebracht ist, auf welcher mindestens eine Dickschichtleiterbahn als Heizleiter befestigt ist. Zur Bestromung der Impulsheizeinrichtung wird der sich in Abhängigkeit von der momentanen Heizleitertemperatur variierende elektrische Widerstand des Heizleiters gemessen und als Regelgröße für die Bestromung eingesetzt.

DE 10 2012 007 594 B1 und DE 10 2012 007 598 A1 offenbaren eine Verpackungsmaschine mit einer Vorsiegelstation zum Herstellen einer Vorsiegelnaht sowie eine in Produktionsrichtung nachgelagerte Hauptsiegelstation zum Herstellen einer Hauptsiegelnaht, wobei die Vorsiegelnaht zusammen mit der Hauptsiegelnaht an einer fertig hergestellten Verpackung eine geschlossene Siegelnaht ergeben.

US 5 096 052 A offenbart eine Schalenverschließvorrichtung mit in Produktionsrichtung hintereinander angeordneten Siegelstationen, die jeweils eine Siegelschiene umfassen, um eine Deckelfolie auf ein darunter positioniertes Schalenteil zu versiegeln.

US 5 345 747 A offenbart eine Schalenverschließvorrichtung, die ein erstes Siegelwerkzeug mit Ultraschallgebern und diesen zugeordneten Gegendruckrollen umfasst, um eine Deckelfolie entlang gegenüberliegender Ränder eines Schalenteils zu versiegeln. Ferner verfügt die Schalenverschließvorrichtung über ein zweites Siegelwerkzeug mit Ultraschallgebern und diesbezüglich angeordneten Gegendruckrollen, um die Deckelfolie entlang der übrigen, gegenüberliegenden Seiten des Schalenteils zu versiegeln. Das Schalenteil wird in einer ersten Richtung durch das erste Siegelwerkzeug und in einer quer zur ersten Richtung verlaufenden, zweiten Richtung durch das zweite Siegelwerkzeug transportiert.

Oft sind die Siegelnähte bei konventionellem dauerbeheiztem Siegelwerkzeug noch warm und mechanisch nicht belastbar, sobald das Siegelwerkzeug geöffnet wird. Dies tritt vor allem bei Mono-Material Folien wie beispielsweise PE oder HDPE auf. Das Gewicht des Produktes wirkt auf die noch warmen nicht formstabilen Siegelnähte und beeinflusst die Siegelnahtqualität im negativen Sinne. Dies kann sogar dazu führen, dass die gewünschten Barriereeigenschaften der Verpackung nicht mehr gegeben sind.

Aufgabe der Erfindung ist es, eine Tiefziehverpackungsmaschine zur Verfügung zu stellen, die sowohl in wirtschaftlicher als auch in qualitativer Hinsicht den Siegelvorgang verbessert. Außerdem soll ein dementsprechendes Verfahren an einer Tiefziehverpackungsmaschine bereitgestellt werden.

Diese Aufgabe wird gelöst mittels einer Tiefziehverpackungsmaschine gemäß dem Anspruch 1. Ferner wird diese Aufgabe gelöst mittels eines Verfahrens an einer Tiefziehverpackungsmaschine gemäß dem Anspruch 9.

Vorteilhafte Weiterbildungen der Erfindung sind durch die jeweiligen Gegenstände der Unteransprüche gegeben.

Die erfindungsgemäße Tiefziehverpackungsmaschine weist in Produktionsrichtung eine Formstation zum Herstellen von Mulden in einer Folienbahn, eine Einlegestrecke zum Befüllen der Mulden mit einem Produkt, eine Siegeleinrichtung zum Versiegeln der Mulden mit einer Oberfolie, sowie eine Schneideinrichtung zum Vereinzeln fertig hergestellter Verpackungen auf. Die Siegeleinrichtung umfasst ein erstes Siegelwerkzeug für einen ersten Siegeltakt und ein zweites Siegelwerkzeug für einen zweiten Siegeltakt.

Erfindungsgemäß umfasst das erste Siegelwerkzeug mindestens ein relativ zur Produktionsrichtung in einer ersten Ausrichtung ausgerichtetes erstes Paar Impulssiegelschienen zum Erzeugen erster Siegelnahtabschnitte und das zweite Siegelwerkzeug mindestens ein relativ zur Produktionsrichtung in einer zweiten Ausrichtung ausgerichtetes zweites Paar Impulssiegelschienen zum Erzeugen zweiter Siegelnahtabschnitte. Die Impulssiegelschienen können in kompakter Bauart innerhalb der Siegelstation der Tiefziehverpackungsmaschine integriert werden. Für den Siegelprozess bieten die Impulssiegelschienen vor allem den wesentlichen Vorteil, dass sie abwechselnd schnell aufheizbar und abkühlbar sind, sodass sie energieeffizient zur Herstellung der Siegelnähte angesteuert werden können. Diese Eigenschaft lässt sich hervorragend in der intermittierenden Arbeitsweise der Tiefziehverpackungsmaschine integrieren. Hinzu kommt, dass aufgrund der schnellen Abkühlfähigkeit der Impulssiegelschienen diese zum Ausbilden sehr dünner, empfindlicher Siegelnähte prädestiniert sind.

Die bei der Erfindung eingesetzten Impulssiegelschienen brauchen im Gegensatz zu herkömmlichen Siegelwerkzeugen nicht dauerhaft beheizt werden. Für die jeweiligen Siegeltakte werden die erfindungsgemäßen Impulssiegelschienen für einen Sekundenbruchteil mit einem Stromimpuls versorgt und dadurch auf eine gewünschte Siegeltemperatur aufgeheizt. Durch eine Unterbrechung der Bestromung können die Impulssiegelschienen rasch auf ein gewünschtes Temperaturniveau abkühlen. Diese intermittierende Bestromung der Impulssiegelschienen ermöglicht einen energieeffizienten Siegelvorgang. Der Einsatz von Impulssiegelschienen bietet vor allem beim Verpacken empfindlicher Produkte, beispielsweise beim Verpacken medizinischer Produkte, den Vorteil einer schonenden Materialversiegelung mit unmittelbar nach dem Siegelprozess mechanisch belastbaren Siegelnähten.

Die bei der erfindungsgemäßen Tiefziehverpackungsmaschine vorgesehene paarweise Aufteilung daran vorgesehener Impulssiegelschienen ermöglicht es, dass Siegelkräfte und Siegelzeiten beispielsweise zur Herstellung von Längs- und Quersiegelnähten derart auf verschiedene Siegelarbeitstakte aufgeteilt werden können, dass dadurch hergestellte, geschlossene Siegelnähte präziser herstellbar sind. Das Vorsehen gesonderter Impulssiegelschienenpaare für verschiedene Siegeltakte ermöglicht eine bessere Kraftaufnahmeverteilung entlang der Siegeleinrichtung und damit eine schonende Folienverschweißung, was insgesamt zu einer qualitativ sehr hochwertigen Siegelnahtherstellung führt.

Vorzugsweise handelt es sich bei einer der erfindungsgemäß eingesetzten Impulssiegelschienen um eine Siegelschiene mit einem durch Widerstandserwärmung aufheizbaren Heizleiter, der taktweise mittels eines an ihm während eines Bruchteils einer Sekunde oder während weniger Sekunden anliegenden Stromimpulses auf eine gewünschte Siegeltemperatur aufheizbar ist. Der Stromimpuls kann mittels eines Impulsgebers erzeugt werden.

Gemäß einer Ausführungsform weisen die jeweiligen Impulssiegelschienen mindestens einen elektrischen Heizleiter auf, der z.B. als Heizband oder als Heizdraht ausgebildet sein kann. Der Heizleiter kann während des Siegelvorgangs auf die zu verschweißenden Folien gedrückt werden. Der Heizleiter ist durch einen daran pro Siegeltakt während des Betriebs der Siegeleinrichtung aufgebrachten Stromimpuls aufgrund dessen elektrischen Widerstands auf eine vorbestimmte Siegeltemperatur erhitzbar. Zwischen den Stromimpulsen, d.h. während jeweiligen Unterbrechungen der Stromzufuhr am Heizleiter, kühlt der Heizleiter auf ein Temperaturniveau ab, bis im anschließenden Siegeltakt erneut ein Stromimpuls daran ankommt, wodurch sich der Heizleiter wieder auf das Siegeltemperaturniveau erwärmt.

Vorzugsweise weisen die jeweiligen Impulssiegelschienen einen Schienenkörper sowie eine zwischen dem Schienenkörper und dem Heizleiter angeordnete Isolierschicht auf. Anhand der Isolierschicht kann zumindest größtenteils verhindert werden, dass die am Heizleiter erzeugte Wärmeenergie auf andere Komponenten der Impulssiegelschienen, beispielsweise auf den Schienenköper, übertragen wird, wodurch die Siegelleistung des Heizleiters potentiell reduziert werden könnte.

Eine Variante sieht vor, dass die Siegeleinrichtung jeweils für das erste Siegelwerkzeug und für das zweite Siegelwerkzeug mindestens einen Impulsgeber umfasst, der dazu ausgebildet ist, während des Betriebs der Siegeleinrichtung Stromimpulse für die jeweiligen Siegeltakte zu erzeugen, um damit die jeweiligen Heizleiter der Impulssiegelschienen der beiden Siegelwerkzeuge zu erhitzen. In einer Variante können zwei gleich ausgebildete Siegelschienen mit einem Impulsgeber parallel angesteuert werden.

Vorzugsweise sind das erste Siegelwerkzeug und das zweite Siegelwerkzeug in Produktionsrichtung hintereinander, separat oder als integrale Einheit ausgebildet. Eine separate Ausführung des ersten und des zweiten Siegelwerkzeugs hätte den Vorteil, dass diese unabhängig voneinander bewegbar und/oder ansteuerbar sind. Dies begünstigt ggf. einen sensorgesteuerten Betrieb der Tiefziehverpackungsmaschine, weil sich dadurch die jeweiligen daran durchgeführten Arbeitstakte besser aufeinander abstimmen lassen. Die integrale Variante des ersten und zweiten Siegelwerkzeugs bietet insbesondere Vorteile für einen kompakten Aufbau.

Gemäß einer Variante können das erste Siegelwerkzeug und das zweite Siegelwerkzeug zeitlich und örtlich getrennte Siegelschritte durchführen. Die damit hergestellten Siegelnähte ergeben zusammen eine geschlossene Siegelnaht an den jeweiligen Verpackungen. Damit lassen sich die jeweiligen Siegelnähte einzelner Verpackungen Schritt für Schritt entlang der Tiefziehverpackungsmaschine herstellen, sodass die zur Herstellung der jeweiligen Siegelnähte benötigten Siegelkräfte entlang der Tiefziehverpackungsmaschine auf mehrere Stationen verteilt werden können. Dies begünstigt auch eine schonende Verschweißung der Verpackungsfolien, was vor allem beim Verpacken empfindlicher Produkte und unter Verwendung sensibler Monofolien, beispielsweise beim Verpacken medizinischer Produkte, vorteilhaft ist.

Eine Ausführungsform sieht vor, dass zur Herstellung von einer geschlossenen Siegelnaht das erste Siegelwerkzeug dazu konfiguriert ist, mittels des ersten Paars der Impulssiegelschienen an jeweiligen Verpackungen gegenüberliegende erste Siegelnahtabschnitte während des ersten Siegeltakts herzustellen, und das zweite Siegelwerkzeug dazu konfiguriert ist, mittels des zweiten Paars der Impulssiegelschienen an den jeweiligen Verpackungen gegenüberliegende zweite Siegelnahtabschnitte während des zweiten, dem ersten nachfolgenden Siegeltakts herzustellen. Damit kann die Herstellung der jeweiligen gegenüberliegenden Siegelnähte an einer jeweiligen Verpackung in nachfolgenden Siegeltakten, insbesondere an hintereinander in Produktionsrichtung angeordneten Siegelstationen, durchgeführt werden.

Vorzugsweise sind das erste Paar Impulssiegelschienen quer zur Produktionsrichtung und das zweite Paar Impulssiegelschienen in Produktionsrichtung ausgerichtet. Mittels des ersten und des zweiten Siegelwerkzeugs können somit Siegelnähte mehrfach und in unterschiedlichen Orientierungen erzeugt werden. Bei der vorliegenden Variante können etappenweise sowohl Siegelnähte in Produktionsrichtung als auch Siegelnähte orthogonal zur Produktionsrichtung hergestellt werden.

Vorstellbar ist es, dass das erste Paar Impulssiegelschienen und das zweite Paar Impulssiegelschienen derart dimensioniert sind, dass sich zumindest die jeweiligen Enden der damit hergestellten ersten und zweiten Siegelnahtabschnitte überschneiden. Damit kann sichergestellt werden, dass die jeweiligen ersten und zweiten Siegelnahtabschnitte zusammen an den jeweiligen Verpackungen entlang dessen Umrandung eine geschlossene Versiegelung der Verpackungsfolien erzeugen. In diesem Zusammenhang wäre es vorstellbar, dass das erste Paar Impulssiegelschienen und das zweite Paar Impulssiegelschienen derart dimensioniert sind, dass sich die damit hergestellten ersten und zweiten Siegelnahtabschnitte zumindest bereichsweise über deren zusammenlaufenden Enden hinaus erstrecken, wodurch die Folienbahn mit der Oberfolie außerhalb der jeweiligen hergestellten Verpackungen für einen verbesserten Weiter- und/oder Abtransport verbunden werden.

Vorzuweise ist das erste Paar Impulssiegelschienen dazu ausgebildet, während des ersten Siegeltakts die ersten Siegelnahtabschnitte an einer Verpackung und/oder an benachbarten Verpackungen gleichzeitig herzustellen. Damit wird erreicht, dass das erste Siegelwerkzeug mit den daran ausgebildeten Impulssiegelschienen an einer Verpackung jeweils eine oder gleich mehrere parallele Siegelnähte gleichzeitig herstellen kann. Dies bietet vor allem Vorteile an einer Tiefziehverpackungsmaschine, die für einen mehrspurigen Herstellungsprozess eingesetzt wird.

Eine vorteilhafte Ausführung sieht vor, dass das zweite Paar Impulssiegelschienen dazu ausgebildet ist, während des zweiten Siegeltakts die zweiten Siegelnahtabschnitte an einer Verpackung und/oder an benachbarten Verpackungen gleichzeitig herzustellen. Damit wird erreicht, dass das zweite Siegelwerkzeug mit den daran ausgebildeten Impulssiegelschienen an einer Verpackung jeweils eine oder gleich mehrere parallele Siegelnähte gleichzeitig herstellen kann. Dies bietet vor allem Vorteile an einer Tiefziehverpackungsmaschine, die für einen mehrspurigen Herstellungsprozess eingesetzt wird.

Vorzugsweise ist das erste Paar Impulssiegelschienen und/oder das zweite Paar Impulssiegelschienen zur Herstellung geradliniger, ggf. leicht gekrümmter oder welliger, erster und/oder zweiter Siegelnahtabschnitte ausgebildet. Die damit durch den ersten und den zweiten Siegeltakt hergestellten geradlinigen Siegelnähte können zusammen an einer Verpackung eine geschlossene Siegelnaht ergeben. Das Ergebnis derart zusammengesetzter Siegelnähte ist optisch und qualitativ einwandfrei. Die jeweiligen Impulssiegelschienen können als geradlinige Siegelleisten vorliegen, insbesondere stabförmig ausgebildet sein.

Es ist möglich, an der Tiefziehverpackungsmaschine einen Evakuierungs- und/oder Begasungsprozess zum Erzeugen einer gewünschten Atmosphäre innerhalb der hergestellten Verpackungen durchzuführen. Dafür wäre es von Vorteil, wenn zunächst während des ersten Siegeltakts alle quer zur Produktionsrichtung ausgerichteten Siegelnähte hergestellt werden. Daran anschließend könnte über unversiegelte Randbereiche der Verpackungen ein Evakuierungsvorgang und/oder eine Begasung mittels eines gewünschten Schutzgases stattfinden. Im Anschluss an einen derartigen Atmosphärenaustausch können während des zweiten Siegeltakts sämtliche in Produktionsrichtung ausgerichteten Siegelnähte hergestellt werden.

Es ist möglich, dass die jeweiligen Impulssiegelschienen an deren Enden Kontaktkuppen für Heiz- und/oder Zuleitungsbahnen aufweisen. Diese Kontaktkuppen können für den Siegelprozess eine Störkontur sein, da sie beim Andrücken der jeweiligen Impulssiegelschienen gegen das Folienmaterial die Siegelebene durchdringen und dadurch die Verpackungsfolien zusätzlich belasten. Vor diesem Hintergrund ist es vorstellbar, dass die Folienbahn und/oder die Oberfolie für die Kontaktkuppen vorgefertigte Ausformungen vorsieht. Solche Ausformungen könnten alternativ entlang der Tiefziehverpackungsmaschine vor dem Siegelprozess in die Folienbahn und/oder Oberfolie hergestellt werden, um während des Siegelprozesses die Kontaktkuppen der Impulssiegelschienen aufzunehmen.

Möglich wäre es z.B., dass die Formstation zum Herstellen der Mulden auch zum Herstellen solcher Ausformungen ausgebildet ist und/oder eine gesonderte Formstation für diesen Zweck an der Tiefziehverpackungsmaschine angeordnet ist. Die Ausformungen liegen insbesondere außerhalb der zu erzeugenden Verpackungen, z.B. im Bereich der Abfallstreifen (z.B. entlang eines Rand- oder Mittelstreifens). Vorstellbar ist es, dass die Ausformungen zumindest teilweise geschnitten und/oder ausgestanzt werden.

Vorzugsweise sind die jeweiligen Impulssiegelschienen mit einer Flüssigkeitskühlung der Tiefziehverpackungsmaschine verbunden. Die Flüssigkeitskühlung kann als zentrale Einheit zur Kühlung mehrerer Arbeitsstationen der Tiefziehverpackungsmaschine eingesetzt werden, um daran eingesetzte Werkzeuge, beispielsweise die beiden Siegelwerkzeuge, während des Verpackungsprozesses kontinuierlich und/oder zeitweise zu kühlen. Vorstellbar ist es, dass die Flüssigkeitskühlung zumindest abschnittsweise in einer Aufnahme des ersten und/oder zweiten Siegelwerkzeugs ausgebildet ist.

Vorzugsweise sind die jeweiligen Impulssiegelschienen jeweils mittels einer Festloslagerung befestigt. Damit lässt sich während des Heizprozesses eine Wärmeausdehnung der Impulssiegelschienen kompensieren. In anderen Worten kann dadurch verhindert werden, dass in den Impulssiegelschienen mechanische Spannungen entstehen.

Für eine prozesssichere Abführung des Rand- oder Mittelstreifens des übriggebliebenen Verpackungsmaterials kann es sinnvoll sein, in diesen Bereichen zumindest abschnittsweise die Folienbahn mit der Oberfolie zu verbinden. Eine teilweise Versiegelung dieser Bereiche kann bereits mit der Querversiegelung während des ersten Siegeltakts erfolgen, indem entsprechende Quersiegelnähte in den Rand- bzw. Mittelstreifen weitergeführt werden. Für eine erweiterte Versiegelung in Produktionsrichtung kann ein zusätzliches, ggf. dauerbeheiztes Siegelwerkzeug verwendet werden, da die Anforderungen solcher Transfersiegelnähte gering sind. Vorstellbar wäre beispielsweise eine gesonderte Siegelstation, die an der Tiefziehverpackungsmaschine in Produktionsrichtung stromabwärts des zweiten Siegelwerkzeugs die Verpackungsfolien für einen verbesserten Weitertranssport punktuell oder abschnittsweise verbindet. Damit ließen sich die versiegelten Verpackungen sehr genau den nachgelagerten Schneideinrichtungen zuführen.

Ferner bezieht sich die Erfindung auf ein Verfahren an einer Tiefziehverpackungsmaschine zum Versiegeln von in eine Folienbahn geformten Mulden mit einer Oberfolie, wobei die Mulden in Produktionsrichtung einer Siegeleinrichtung zugeführt werden, die ein erstes Siegelwerkzeug für einen ersten Siegeltakt und ein zweites, nachgelagertes Siegelwerkzeug für einen späteren zweiten Siegeltakt aufweist. Erfindungsgemäß setzt das erste Siegelwerkzeug mindestens ein relativ zur Produktionsrichtung in einer ersten Ausrichtung ausgerichtetes erstes Paar Impulssiegelschienen zum Erzeugen erster Siegelnahtabschnitte und das zweite Siegelwerkzeug mindestens ein relativ zur Produktionsrichtung in einer zweiten Ausrichtung ausgerichtetes zweites Paar Impulssiegelschienen zum Erzeugen zweiter Siegelnahtabschnitte ein.

Die Herstellung jeweiliger Siegelnähte für die entlang der Tiefziehverpackungsmaschine hergestellten Verpackungen lässt sich mittels der beiden Paare der Impulssiegelschienen auf einen ersten und einen zweiten Siegeltakt aufteilen, womit die zur Herstellung der Siegelnähte benötigten Siegelkräfte ebenfalls auf die jeweiligen Siegeltakte verteilbar sind, sodass insgesamt unter Verwendung der beiden Impulssiegelschienenpaare qualitativ verbesserte Siegelnähte produziert werden können. Die Verwendung der Impulssiegelschienen für das Versiegeln einzelner Verpackungen ist an der Tiefziehverpackungsmaschine energieeffizient und in kompakter Weise durchführbar.

Eine vorteilhafte Ausführung sieht vor, dass zur Herstellung einer geschlossenen Siegelnaht das erste Siegelwerkzeug mittels des ersten Paars der Impulssiegelschienen an jeweiligen Verpackungen gegenüberliegende erste Siegelnahtabschnitte während des ersten Siegeltakts herstellt und das zweite Siegelwerkzeug mittels des zweiten Paars der Impulssiegelschienen an den vorgenannten jeweiligen Verpackungen gegenüberliegende zweite Siegelnahtabschnitte während des zweiten Siegeltakts herstellt. Damit liegt der erste Siegeltakt als Vorsiegeltakt und der zweite Siegeltakt als Hauptsiegeltakt vor, um an jeweiligen Verpackungen geschlossene Siegelnähte herzustellen. Dies führt dazu, dass sich die benötigten Siegelkräfte optimal unter Verwendung der erfindungsgemäß gepaarten, während des Verpackungsprozesses nacheinander eingesetzten Impulssiegelschienen auf das Verpackungsmaterial verteilen lassen.

Im Folgenden wird eine vorteilhafte Ausführungsform der Erfindung anhand von Zeichnungen näher erläutert. Im Einzelnen zeigen:
- Figur 1: eine perspektivische Ansicht einer erfindungsgemäßen Tiefziehverpackungsmaschine und
- Figur 2: eine schematische Darstellung einer erfindungsgemäßen Siegeleinrichtung mit gepaarten Impulssiegelschienen.

Gleiche Komponenten sind in den Figuren durchgängig mit gleichen Bezugszeichen versehen.

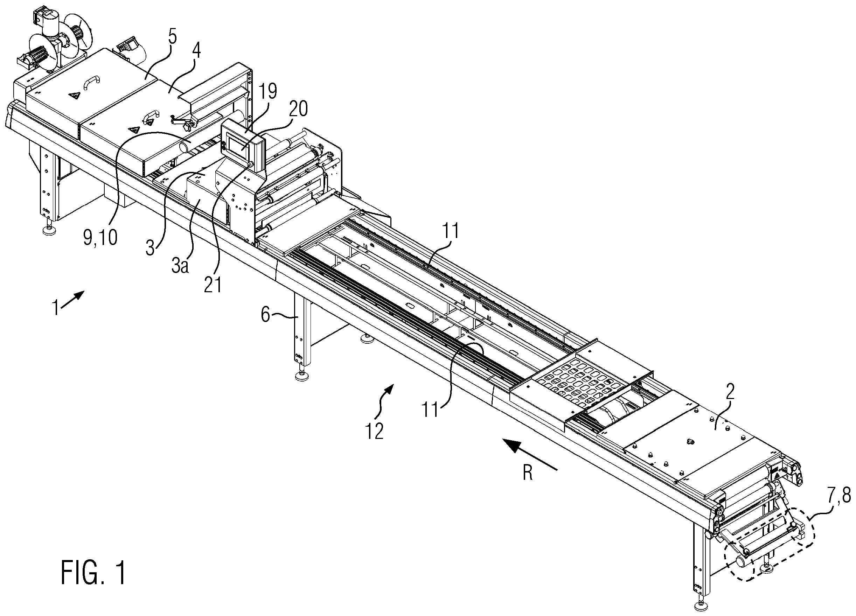

Figur 1 zeigt in perspektivischer Darstellung eine erfindungsgemäße, intermittierend arbeitende Tiefziehverpackungsmaschine 1. Die Tiefziehverpackungsmaschine 1 weist eine Formstation 2, eine Siegeleinrichtung 3, eine Querschneideeinrichtung 4 und eine Längsschneideeinrichtung 5 auf, die in dieser Reihenfolge in einer Produktionsrichtung R an einem Maschinengestell 6 angeordnet sind. Eingangsseitig befindet sich an dem Maschinengestell 6 eine Zufuhrrolle 7 von der eine Folienbahn 8 abgezogen wird. Ferner weist die Tiefziehverpackungsmaschine 1 eine Transportkette 11 auf, die die Folienbahn 8 ergreift und diese in der Produktionsrichtung R weiter transportiert, insbesondere beidseitig angeordnete Transportketten bzw. Klammerketten 11.

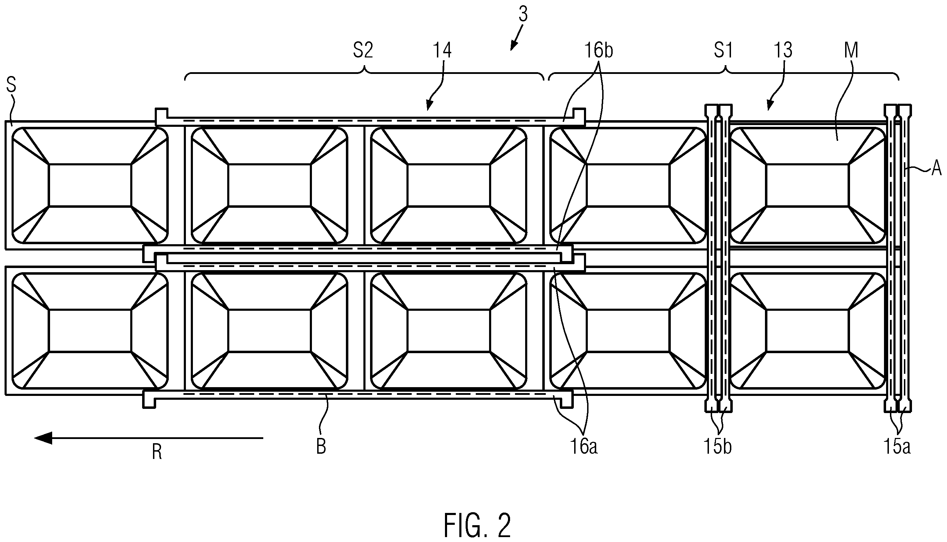

In der dargestellten Ausführungsform ist die Formstation 2 als Tiefziehstation ausgebildet, bei der in die Folienbahn 8 durch Tiefziehen, beispielsweise mittels Druckluft und/oder Vakuum, Mulden M (siehe Figur 2) geformt werden. Dabei kann die Formstation 2 derart ausgebildet sein, dass in der Richtung senkrecht zur Produktionsrichtung R mehrere Mulden M nebeneinander gebildet werden. In Produktionsrichtung R hinter der Formstation 2 ist eine Einlegestrecke 12 vorgesehen, in der die in die Folienbahn 8 geformten Mulden M mit Produkten befüllt werden.

Die Siegeleinrichtung 3 verfügt über eine hermetisch verschließbare Kammer 3a, in der die Atmosphäre in den Mulden M vor dem Herstellen geschlossener Siegelnähte mit der von einer Oberfolienaufnahme 9 abgegebenen Oberfolien 10, z.B. evakuiert und/oder durch Gasspülen mit einem Austauschgas oder mit einem Gasgemisch, ersetzt werden kann.

Die Querschneideeinrichtung 4 kann als Stanze ausgebildet sein, die die Folienbahn 8 und die Oberfolie 10 in einer Richtung quer zur Produktionsrichtung R zwischen benachbarten Mulden M durchtrennt. Dabei arbeitet die Querschneideeinrichtung 4 derart, dass die Folienbahn 8 nicht über die gesamte Breite aufgetrennt wird, sondern zumindest in einem Randbereich nicht durchtrennt wird. Dies ermöglicht einen kontrollierten Weitertransport durch die Transportkette 11.

Die Längsschneideeinrichtung 5 kann als eine Messeranordnung ausgebildet sein, mit der die Folienbahn 8 und die Oberfolie 10 zwischen benachbarten Mulden M und am seitlichen Rand der Folienbahn 8 in der Produktionsrichtung R durchtrennt werden, sodass hinter der Längsschneideeinrichtung 5 vereinzelte Verpackungen vorliegen.

Die Tiefziehverpackungsmaschine 1 verfügt ferner über eine Steuerung 19. Sie hat die Aufgabe, die in der Tiefziehverpackungsmaschine 1 ablaufenden Prozesse zu steuern und zu überwachen. Eine Anzeigevorrichtung 20 mit Bedienelementen 21 dient zum Visualisieren bzw. Beeinflussen der Prozessabläufe in der Tiefziehverpackungsmaschine 1 für bzw. durch einen Bediener.

Figur 2 zeigt in schematischer Darstellung die Siegeleinrichtung 3 mit einem ersten Siegelwerkzeug 13 und einem zweiten Siegelwerkzeug 14, die in dieser Reihenfolge in Produktionsrichtung R hintereinander an der Tiefziehverpackungsmaschine 1 angeordnet sind. Das erste Siegelwerkzeug 13 wird während eines ersten Siegeltakts S1 und das zweite Siegelwerkzeug 14 während eines zweiten Siegeltakts S2 eingesetzt. Das erste Siegelwerkzeug 13 weist ein relativ zur Produktionsrichtung R quer ausgerichtetes erstes Paar Impulssiegelschienen 15A, 15B zum Erzeuggen erster Siegelnahtabschnitte A auf, die in Figur 2 hinsichtlich der Produktionsrichtung R als Quersiegelnähte hergestellt werden. Ferner zeigt Figur 2, dass das zweite Siegelwerkzeug 14 ein in Produktionsrichtung R ausgerichtetes zweites Paar Impulssiegelschienen 16A, 16B zum Erzeugen zweiter Siegelnahtabschnitte B aufweist. An einer jeweiligen fertig hergestellten Verpackung können die ersten und zweiten Siegelnahtabschnitte A, B zusammen eine geschlossene Siegelnaht S erzeugen.

In Figur 2 besitzen die jeweiligen Impulssiegelschienen 15A, 15B jeweils zwei Impulssiegelleisten, die dicht nebeneinander parallel verlaufen. Damit ist die Impulssiegelschiene 15A gemäß Figur 2 zur gleichzeitigen Herstellung benachbarter Siegelnahtabschnitte A an benachbarten Mulden M ausgebildet. Sinngemäß gilt dies auch für die Impulssiegelschiene 15B des ersten Siegelwerkzeugs 13. Die in Produktionsrichtung R stromabwärts angeordneten Impulssiegelschienen 16A, 16B stellen in Produktionsrichtung R an den jeweiligen Verpackungen die Längssiegelnähte her.

Das zweite Paar Impulssiegelschienen 16A, 16B weisen insgesamt vier in Produktionsrichtung R parallel angeordnete Impulssiegelleisten auf, die zur Herstellung der zweiten Siegelnahtabschnitte B längs der Produktionsrichtung R ausgebildet sind.

## Patentansprüche

1. Tiefziehverpackungsmaschine (1), umfassend in Produktionsrichtung (R) eine Formstation (2) zum Herstellen von Mulden (M) in einer Folienbahn (8), eine Einlegestrecke (12) zum Befüllen der Mulden (M) mit einem Produkt, eine Siegeleinrichtung (3) zum Versiegeln der Mulden (M) mit einer Oberfolie (10), sowie eine Schneideinrichtung (4, 5) zum Vereinzeln fertig hergestellter Verpackungen, wobei die Siegeleinrichtung (3) ein erstes Siegelwerkzeug (13) für einen ersten Siegeltakt (S1) und ein zweites Siegelwerkzeug (14) für einen zweiten Siegeltakt (S2) aufweist, **dadurch gekennzeichnet, dass** das erste Siegelwerkzeug (13) mindestens ein relativ zur Produktionsrichtung (R) in einer ersten Ausrichtung ausgerichtetes erstes Paar (15a, 15b) Impulssiegelschienen zum Erzeugen erster Siegelnahtabschnitte (A) und das zweite Siegelwerkzeug (14) mindestens ein relativ zur Produktionsrichtung (R) in einer zweiten Ausrichtung ausgerichtetes zweites Paar Impulssiegelschienen (16a, 16b) zum Erzeugen zweiter Siegelnahtabschnitte (B) aufweist.

2. Tiefziehverpackungsmaschine nach Anspruch 1, **dadurch gekennzeichnet, dass** das erste Siegelwerkzeug (13) und das zweite Siegelwerkzeug (14) in Produktionsrichtung (R) hintereinander, separat oder als integrale Einheit ausgebildet sind.

3. Tiefziehverpackungsmaschine nach Anspruch 1 oder 2, **dadurch gekennzeichnet, dass** zur Herstellung einer geschlossenen Siegelnaht (S) das erste Siegelwerkzeug (13) dazu konfiguriert ist, mittels des ersten Paars der Impulssiegelschienen (15a, 15b) an jeweiligen Verpackungen gegenüberliegende erste Siegelnahtabschnitte (A) während des ersten Siegeltakts (S1) herzustellen, und das zweite Siegelwerkzeug (14) dazu konfiguriert ist, mittels des zweiten Paars der Impulssiegelschienen (16a, 16b) an den jeweiligen Verpackungen gegenüberliegende zweite Siegelnahtabschnitte (B) während des zweiten, dem ersten nachfolgenden Siegeltakts (S2) herzustellen.

4. Tiefziehverpackungsmaschine nach einem der vorangehenden Ansprüche, **dadurch gekennzeichnet, dass** das erste Paar Impulssiegelschienen (15a, 15b) quer zur Produktionsrichtung (R) und das zweite Paar Impulssiegelschienen (16a, 16b) in Produktionsrichtung (R) ausgerichtet sind.

5. Tiefziehverpackungsmaschine nach einem der vorangehenden Ansprüche, **dadurch gekennzeichnet, dass** das erste Paar Impulssiegelschienen (15a, 15b) und das zweite Paar Impulssiegelschienen (16a, 16b) derart dimensioniert sind, dass sich zumindest jeweilige Enden der damit hergestellten ersten und zweiten Siegelnahtabschnitte (A, B) überschneiden.

6. Tiefziehverpackungsmaschine nach einem der vorangehenden Ansprüche, **dadurch gekennzeichnet, dass** das erste Paar Impulssiegelschienen (15a, 15b) dazu ausgebildet ist, während des ersten Siegeltakts (S1) die ersten Siegelnahtabschnitte (A) an einer Verpackung und/oder an benachbarten Verpackungen gleichzeitig herzustellen.

7. Tiefziehverpackungsmaschine nach einem der vorangehenden Ansprüche, **dadurch gekennzeichnet, dass** das zweite Paar Impulssiegelschienen (16a, 16b) dazu ausgebildet ist, während des zweiten Siegeltakts (S2) die zweiten Siegelnahtabschnitte (B) an einer Verpackung und/oder an benachbarten Verpackungen gleichzeitig herzustellen.

8. Tiefziehverpackungsmaschine nach einem der vorangehenden Ansprüche, **dadurch gekennzeichnet, dass** das erste Paar Impulssiegelschienen (15a, 15b) und/oder das zweite Paar Impulssiegelschienen (16a, 16b) zur Herstellung geradliniger erster und/oder zweiter Siegelnahtabschnitte (A, B) ausgebildet ist.

9. Verfahren an einer Tiefziehverpackungsmaschine (1) zum Versiegeln von in eine Folienbahn (8) geformten Mulden (M) mit einer Oberfolie (10), wobei die Mulden (M) in Produktionsrichtung (R) einer Siegeleinrichtung (3) zugeführt werden, die ein erstes Siegelwerkzeug (13) für einen ersten Siegeltakt (S1) und ein zweites, nachgelagertes Siegelwerkzeug (14) für einen späteren zweiten Siegeltakt (S2) aufweist, **dadurch gekennzeichnet, dass** das erste Siegelwerkzeug (13) mindestens ein relativ zur Produktionsrichtung (R) in einer ersten Ausrichtung ausgerichtetes erstes Paar Impulssiegelschienen (15a, 15b) zum Erzeugen erster Siegelnahtabschnitte (A) und das zweite Siegelwerkzeug (14) mindestens ein relativ zur Produktionsrichtung (R) in einer zweiten Ausrichtung ausgerichtetes zweites Paar Impulssiegelschienen (16a, 16b) zum Erzeugen zweiter Siegelnahtabschnitte (B) einsetzt.

10. Verfahren nach Anspruch 9, **dadurch gekennzeichnet, dass** zur Herstellung einer geschlossenen Siegelnaht (S) das erste Siegelwerkzeug (13) mittels des ersten Paars der Impulssiegelschienen (15a, 15b) an jeweiligen Verpackungen gegenüberliegende erste Siegelnahtabschnitte (A) während des ersten Siegeltakts (S1) herstellt und das zweite Siegelwerkzeug (14) mittels des zweiten Paars der Impulssiegelschienen (16a, 16b) an den jeweiligen Verpackungen gegenüberliegende zweite Siegelnahtabschnitte (B) während des zweiten Siegeltakts (S2) herstellt.

## Claims

1. Deep-drawing packaging machine (1), comprising in the direction of production (R) a forming station (2) for producing trays (M) in a film web (8), a loading stretch (12) for filling said trays (M) with a product, a sealing device (3) for sealing said trays (M) with a top film (10), as well as a cutting device (4,5) for separating finished packagings, where said sealing device (3) comprises a first sealing tool (13) for a first sealing cycle (S1) and a second sealing tool (14) for a second sealing cycle (S2), **characterized in that** said first sealing tool (13) comprises at least one first pair (15a, 15b) of impulse sealing bars oriented in a first orientation relative to said direction of production (R) for producing first sealing seam sections (A) and said second sealing tool (14) at least one second pair of impulse sealing bars (16a, 16b) oriented in a second orientation relative to said direction of production (R) for producing second sealing seam sections (B).

2. Deep-drawing packaging machine according to claim 1, **characterized in that** said first sealing tool (13) and said second sealing tool (14) are formed in said direction of production (R) one behind the other, separately, or as an integral unit.

3. Deep-drawing packaging machine according to claim 1 or 2, **characterized in that**, for producing a closed sealing seam (S), said first sealing tool (13) is configured to produce oppositely disposed first sealing seam sections (A) on said respective packagings during said first sealing cycle (S1) by way of said first pair of impulse sealing bars (15a, 15b), and said second sealing tool (14) is configured to produce oppositely disposed second sealing seam sections (B) on said respective packagings by way of said second pair of impulse sealing bars (16a, 16b) during said second sealing cycle (S2) following the first one.

4. Deep-drawing packaging machine according to one of the preceding claims, **characterized in that** said first pair of impulse sealing bars (15a, 15b) is oriented transverse to said direction of production (R) and said second pair of impulse sealing bars (16a, 16b) in said direction of production (R).

5. Deep-drawing packaging machine according to one of the preceding claims, **characterized in that** said first pair of impulse sealing bars (15a, 15b) and said second pair of impulse sealing bars (16a, 16b) are dimensioned such that at least respective ends of said first and said second sealing seam sections (A, B) produced with the former overlap.

6. Deep-drawing packaging machine according to one of the preceding claims, **characterized in that** said first pair of impulse sealing bars (15a, 15b) is configured to simultaneously produce said first sealing seam sections (A) on a packaging and/or on adjacent packagings during said first sealing cycle (S1).

7. Deep-drawing packaging machine according to one of the preceding claims, **characterized in that** said second pair of impulse sealing bars (16a, 16b) is configured to simultaneously produce said second sealing seam sections (B) on a packaging and/or on adjacent packagings during said second sealing cycle (S2).

8. Deep-drawing packaging machine according to one of the preceding claims, **characterized in that** said first pair of impulse sealing bars (15a, 15b) and/or said second pair of impulse sealing bars (16a, 16b) are configured to produce linear first and/or second sealing seam sections (A, B).

9. Method for a deep-drawing packaging machine (1) for sealing trays (M) formed into a film web (8) with a top film (10), where said trays (M) are supplied in said direction of production (R) to a sealing device (3) which comprises a first sealing tool (13) for a first sealing cycle (S1) and a downstream second sealing tool (14) for a later second sealing cycle (S2), **characterized in that** said first sealing tool (13) uses at least one first pair of impulse sealing bars (15a, 15b) oriented in a first orientation relative to said direction of production (R) for producing first sealing seam sections (A) and said second sealing tool (14) at least one second pair of impulse sealing bars (16a, 16b) oriented in a second orientation relative to said direction of production (R) for producing second sealing seam sections (B).

10. Method according to claim 9, **characterized in that**, for producing a closed sealing seam (S), said first sealing tool (13) produces oppositely disposed first sealing seam sections (A) on respective packagings during said first sealing cycle (S1) by way of said first pair of impulse sealing bars (15a, 15b), and said second sealing tool (14) produces oppositely disposed second sealing seam sections (B) on said respective packagings during said second sealing cycle (S2) by way of said second pair of impulse sealing bars (16a, 16b).

## Revendications

1. Machine d'emballage par emboutissage (1), comprenant, dans le sens de production (R), un poste de formage (2) pour réaliser des creux (M) dans une bande de film (8), une section d'insertion (12) pour remplir les creux (M) avec un produit, un dispositif de scellage (3) pour sceller les creux (M) avec un film supérieur (10), ainsi qu'un dispositif de coupe (4, 5) pour séparer les emballages fabriqués, le dispositif de scellage (3) présentant un premier outil de scellage (13) pour un premier cycle de scellage (S1) et un second outil de scellage (14) pour un second cycle de scellage (S2), **caractérisé en ce que** le premier outil de scellage (13) présente au moins une première paire (15a, 15b) de rails de scellage par impulsion adoptant une première orientation par rapport à la direction de production (R) pour produire des premières sections de joint de scellage (A) et le second outil de scellage (14) présente au moins une seconde paire de rails de scellage par impulsion (16a, 16b) adoptant une seconde orientation par rapport à la direction de production (R) pour produire des secondes sections de joint de scellage (B).

2. Machine d'emballage par emboutissage selon la revendication 1, **caractérisée en ce que** le premier outil de scellage (13) et le second outil de scellage (14) sont réalisés l'un derrière l'autre dans le sens de production (R), séparément ou d'un seul tenant.

3. Machine d'emballage par emboutissage selon les revendications 1 ou 2, **caractérisée en ce que**, pour réaliser un joint de scellage fermé (S), le premier outil de scellage (13) est configuré pour réaliser des premières parties de joint de scellage opposées (A) sur des emballages respectifs au moyen de la première paire de rails de scellage par impulsion (15a, 15b) pendant le premier cycle de scellage (S1), et le second outil de scellage (14) est configuré pour produire, au moyen de la seconde paire de rails de scellage à impulsion (16a, 16b), des secondes parties de joint de scellage (B) opposées sur les emballages respectifs pendant la seconde cadence de scellage (S2) suivant la première.

4. Machine d'emballage par emboutissage selon l'une des revendications précédentes, **caractérisée en ce que** la première paire de rails de scellage par impulsion (15a, 15b) est orientée transversalement à la direction de production (R) et la seconde paire de rails de scellage par impulsion (16a, 16b) est orientée dans la direction de production (R).

5. Machine d'emballage par emboutissage selon l'une quelconque des revendications précédentes, **caractérisée en ce que** la première paire de rails de scellage par impulsion (15a, 15b) et la seconde paire de rails de scellage par impulsion (16a, 16b) sont dimensionnées de telle sorte qu'au moins des extrémités respectives des première et seconde parties de cordon de scellage (A, B) produites avec celles-ci se croisent.

6. Machine d'emballage par emboutissage selon l'une quelconque des revendications précédentes, **caractérisée en ce que** la première paire de rails de scellage par impulsion (15a, 15b) est conçue pour réaliser simultanément, pendant le premier cycle de scellage (S1), les premières portions de cordon de scellage (A) sur un emballage et/ou sur des emballages adjacents.

7. Machine d'emballage par emboutissage selon l'une quelconque des revendications précédentes, **caractérisée en ce que** la seconde paire de rails de scellage par impulsion (16a, 16b) est conçue pour réaliser simultanément les secondes portions de cordon de scellage (B) sur un emballage et/ou sur des emballages adjacents pendant le second cycle de scellage (S2).

8. Machine d'emballage par emboutissage selon l'une quelconque des revendications précédentes, **caractérisée en ce que** la première paire de rails de scellage par impulsion (15a, 15b) et/ou la seconde paire de rails de scellage par impulsion (16a, 16b) est conçue pour réaliser des premières et/ou secondes sections de cordon de scellage rectilignes (A, B).

9. Procédé associé à une machine d'emballage par emboutissage (1) pour le scellage de creux (M) formés dans une bande de film (8) avec un film supérieur (10), les creux (M) étant amenés dans le sens de production (R) à un dispositif de scellage (3) qui présente un premier outil de scellage (13) pour un premier cycle de scellage (S1) et un second outil de scellage (14) placé en aval pour un second cycle de scellage (S2) ultérieur, **caractérisé,** que le premier outil de scellage (13) utilise au moins une première paire de rails de scellage à impulsion (15a, 15b) adoptant une première orientation par rapport à la direction de production (R) pour produire des premiers tronçons de cordon de scellage (A) et le second outil de scellage (14) utilise au moins une seconde paire de rails de scellage à impulsion (16a, 16b) adoptant une seconde orientation par rapport à la direction de production (R) pour produire des seconds tronçons de cordon de scellage (B) .

10. Procédé selon la revendication 9, **caractérisé en ce que**, pour réaliser un joint de scellage fermé (S), le premier outil de scellage (13), au moyen de la première paire de rails de scellage à impulsion (15a, 15b) réalise des premières parties de joint de scellage (A) opposées sur des emballages respectifs pendant le premier cycle de scellage (S1) et le second outil de scellage (14) réalise des secondes parties de joint de scellage (B) opposées sur les emballages respectifs pendant le second cycle de scellage (S2) au moyen de la seconde paire de rails de scellage à impulsion (16a, 16b).
